# EUROPEAN PATENT APPLICATION

(11) **EP 4 751 785 A1**
(43) Date of publication of application: **03.06.2026**
(21) Application number: 24215869.9
(22) Date of filing: 27.11.2024
(51) Int. Cl.: A63B 69/36, G01S 13/88, G01S 17/88, G01S 15/88

(54) **IMPROVED PUTTING DEVICE**

(71) Applicant: Reynaerts, Hans, 9000 Gent (BE)
(72) Inventor: Reynaerts, Hans, 9000 Gent (BE)
(74) Representative: Patentales BV

(57) **Abstract**

The invention provides, amongst other aspects, a golf putting device comprising: an ejector configured to eject a golf ball; a first sensor configured to emit first waves and measure a reflection of said emitted first waves; and a processor, wherein the device is configured to be changed between: a first state in which the ejector is configured to eject a first golf ball at a first predetermined speed, the first sensor is configured to measure first reflected waves reflected from the ejected first golf ball, and the processor is configured to determine a green speed based on the first predetermined speed of the ejected first golf ball and the measured first reflected waves, and a second state in which the first sensor is configured to measure second reflected waves reflected from a target point, the processor is configured to determine a target distance to the target point based on the measured second reflected waves, and the ejector is configured to eject a second golf ball at a second predetermined speed based on the determined green speed and the determined target distance.

## Description

### Field of the invention

The present invention relates to the technical domain of golfing, and more particularly to a putting device for improving putting.

### Background art

Putting constitutes approximately half of all strokes taken by a typical golfer. This means mastering putting is crucial for success on the golf course. A golfer's ability to accurately assess the speed and contours of the green, determining both the path a ball will take, and the appropriate force needed for a successful putt, directly impacts their overall score. However, accurately reading greens requires years of practice and experience. Golfers rely heavily on their interpretation of subtle cues like grass type, grain direction, wind conditions, the slope of the green, and surrounding terrain. This complex process often involves trial and error, with feedback coming only after each putt is executed. However, immediate and accurate feedback is essential for efficient learning. When a golfer receives insufficient feedback, they may struggle to identify mistakes and refine their green reading skills, potentially repeating the same errors repeatedly. Misattributing a missed putt solely to an improper strike, when in fact it resulted from an inaccurate read of the green's speed or contours, can hinder progress.

While some existing technologies like putting mats with sensors provide feedback on ball speed and distance, they lack the sophistication to analyze green reading nuances. They primarily focus on stroke mechanics rather than addressing the golfer's understanding of the green's topography and surface conditions. For example, US9597576B2, describes a method for using a mobile putting device to determine an optimal trajectory and force with which the ball should be struck. However, this approach relies on a known green speed and therefore doesn't provide immediate feedback on green reading accuracy.

These challenges highlight the need for improved methods that can overcome these limitations.

The present invention aims at addressing issues, such as the issues mentioned above.

### Summary of the invention

According to a first aspect, the present invention provides a golf putting device comprising:
- an ejector configured to eject a golf ball;
- a first sensor configured to emit first waves and measure a reflection of said emitted first waves;
- a processor configured to communicate with the ejector and the first sensor,
wherein the device is **preferably** configured to be changed between at least two of a plurality of states. Therein, the plurality of states may relate to at least two states, e.g., two states, or three states, or four states. In embodiments, the at least two states relate at least to following two states:
a first state in which the ejector is configured to eject a first golf ball at a first predetermined speed, the first sensor is configured to measure first reflected waves reflected from the ejected first golf ball, and the processor is configured to determine a green speed based on the first predetermined speed of the ejected first golf ball and the measured first reflected waves, and
a second state in which the first sensor is configured to measure second reflected waves reflected from a target point, the processor is configured to determine a target distance to the target point based on the measured second reflected waves, and the ejector is configured to eject a second golf ball at a second predetermined speed based on the determined green speed and the determined target distance.

In embodiments, the switching plurality of states relates to each of the first, second and third state. In embodiments, the plurality of states consists of (only) the first and the second state. In embodiments, the plurality of states consists of (only) the first and the third state. In embodiments, the plurality of states consists of (only) the second and the third state.

In preferred embodiments, switching between one state and another state relates to switching from the first state to the other state and vice versa. In alternative embodiments, switching between one state and another state relates to switching from the first state to the other state.

In embodiments, the change of state of the device relates to switching between the first and the second state. In embodiments, the change of state of the device relates to switching between one of the first and the second state, on the one hand, and the third state. In embodiments, the change of state of the device relates to switching between one of the first and the third state, on the one hand, and the second state. In embodiments, the change of state of the device relates to switching between one of the second and the third state, on the one hand, and the third state. In embodiments, the change of state of the device relates to switching between the first and the third state. In embodiments, the change of state of the device relates to switching between the second and the third state. Thereby, in embodiments, the switching may relate to receiving a trigger for switching. The trigger for switching may relate, e.g., to a means for user interaction (e.g. a button) and/or to a movement or relative position of the device (e.g. the device being flipped or the device being in a flipped position).

In embodiments, the target point relates to an auxiliary element, i.e., an auxiliary object that may be placed, e.g., just behind the hole. Thereby, first or second reflected waves, preferably second reflected waves, may relate to reflections of waves on said auxiliary element. In embodiments the auxiliary element is a passive element, and reflection relates to passive (non-amplified) reflection. In embodiments the auxiliary element is an active element, e.g., an element configured to amplify received first or second waves and/or to receive and subsequently transmit amplified or otherwise modified first or second waves. In examples with such an element, the device may measure the distance to the hole using the first sensor that calculates the distance relative to the element, which may increase measurement accuracy. In embodiments, the auxiliary element comprises a graduation, e.g., a range of visual markings or other markings. This may relate, e.g., to a passive graduated target.

In embodiments relating to the first state, the first sensor is configured to further measure further reflected waves originating from a

In preferred embodiments, said determining of the target distance to the target point based on the measured second reflected waves entails determining a further quantity or parameter relating to the ball trajectory. Further quantities relating to the ball trajectory may include: an angle for shooting the ball; an intermediate coordinate along a curved trajectory, an equivalent distance. Thereby, in embodiments, the equivalent distance may relate to the virtual distance. For instance, an angle for shooting the ball may be calculated based on a measured slope of the golf course and may deviate from the "straight" angle for reaching the target. In another example, an intermediate coordinate along a curved trajectory may be calculated for compensating for slope, wherein aiming for the intermediate coordinate may allow to reach the target in view of slope. In yet another example, the equivalent distance may be calculated based on the target distance and a measure for slope or a quantitative characteristic of the terrain. In yet other examples, the parameter relating to the ball trajectory may relate to a qualitative characteristic of the terrain, such as a terrain type.

The present invention may advantageously provide a device which synergistically combines two or even all three states. This combination is synergistic in view of the tight connection between states, both from the user's perspective (and usability considerations) and from the technical perspective (where a parameter determined in one state may be input information for another state). Such synergistic combination of states is not described or suggested in the prior art.

For instance, in embodiments, the device integrates, e.g., the determination of the green speed and the determination of the distance to a target point, such as a putting hole. While US9597576B2 describes a method for determining optimal trajectory and force for putting a ball, US9597576B2 relies on topographical information relative to the green, which is provided to the device. However, the prior art does not provide a device which integrates determining the green speed and determining the distance to the target point. The topographical information or the green speed is not always accessible or available or even up-to-date. Therefore, the user may alternatively rely on a Stimpmeter, a state-of-the-art device for measuring the green speed, however, it is not very accurate, since it can involve human error, and it requires the user to carry an additional and long (almost 1 meter long) device. Hence, the user is burdened with the inconvenience of carrying an extra, cumbersome tool that doesn't always yield reliable results or with the frustration of using data that may be irrelevant due to changing course conditions throughout the day. Hence, the present invention may advantageously provide a golf ball ejector and a first sensor which are integrated into a single device and used to perform said determination of green speed and target distance. The present invention provides a device which is configured to be changed between two or more states, particularly between a first state for determining the green speed and a second state for determining at least the target distance.

In particularly advantageous embodiments, in the first state, the processor is configured to determine a first distance travelled by the first golf ball based on the measured first reflected waves, wherein the green speed is determined based on the determined first distance. The prior art does not integrate a sensor for sensing the distance travelled by a golf ball. Thus, the prior art cannot determine in real-time an actual distance travelled by a golf ball. Hence, the present invention may advantageously provide an improved means of determining the distance travelled by the golf ball to better determine the golf speed.

In particularly advantageous embodiments, in the second state, the processor is configured to determine a target speed as the second predetermined speed for the second golf ball to reach the target point, based on the determined green speed and the determined target distance. Preferably, the processor may be configured to determine a target height of the target point based on the measured second reflected waves, wherein the target speed is determined based on the determined target height. More preferably, the processor is configured to determine a target orientation for the second golf ball to reach the target point, based on the determined target height, wherein the target speed is determined based on the determined target orientation. Thus, the present invention may advantageously provide a device which more efficiently determines the target speed for the golf ball to reach the target point. Compared to the prior art, the present invention allows to determine both the green speed and the target speed, independent of the location on the golf course and/or of the time of the day, particularly when the golf course conditions change throughout the day and/or the green fluctuates at different locations on the golf course.

In more particularly advantageous embodiments, in the second state, the first sensor is configured to measure third reflected waves from the ejected second golf ball, and the processor is configured to adjust the determined target speed and/or target orientation. This may advantageously allow the device to further improve the determination of the target speed and/or target orientation, e.g., based on a change in the orientation of the device. For example, the in the first state, the device is oriented in a first orientation, while in the second state, the device is oriented in a second orientation, such as the determined target orientation. Thus, the green speed may be different along the second orientation. Therefore, the device takes this change into account and, based on the measurements of the first sensor of the reflected waves from the ejected second golf ball, the device can more effectively and reliably adjust the determined target speed and/or target orientation. Additionally, or alternatively, the first sensor is configured to measure third reflected waves from the ejected second golf ball, and the processor is configured to adjust the determined green speed, preferably along the determined target orientation. Therefore, the device takes the measured reflected waves from the ejected second golf ball into account and more effectively and reliably adjusts the determined green speed. Said adjustment of the green speed may be performed in the second state. This may allow for more efficient adaptation of the green speed, without having to change between states. However, the adapting of the green speed may alternatively be performed in the first state, wherein the device is first changed to the first state, and after updating the green speed, the device is changed back to the second state.

In particularly advantageous embodiments, the device comprises a second sensor configured to emit second waves and measure a reflection of said emitted second waves, wherein the processor is configured to communicate with the second sensor, wherein the device is configured to be changed to a third state in which the second sensor is configured to measure third wave reflections of a golf clubhead being swung by the user, and the processor is configured to determine a swing speed of the golf clubhead based on the measures third wave reflections. The prior art does not concern a device which integrates all of the following: determining green speed, determining target distance and/or target speed and/or target orientation (herein referred to as "target distance/speed/orientation"), and determining swing speed. The present invention provides a device which is configured to be changed between two or more states, particularly between a first state for determining the green speed, a second state for determining at least the target distance/speed/orientation, and a third state for determining swing speed.

In alternative embodiments, the device is not configured to be changed between states, and instead is configured for operating in a single state. This may relate to single-state operation according to any of the first state, the second state, and the third state. For instance, this may relate to first-state-only operation, wherein, e.g., a greenkeeper, may use the device for determining the greenspeed only.

According to a second aspect, the present invention provides a use of a golf putting device according to the invention in golf putting training.

According to a third aspect, the present invention provides a (computer-implemented) method comprising the steps of:
- obtaining measured first reflected waves reflected from an ejected first golf ball, wherein the first golf ball is ejected at a first predetermined speed,
- determining a green speed based on the first predetermined speed of the ejected first golf ball and the measured first reflected waves,
- obtaining measured second reflected waves reflected from a target point, and
- determining a target distance to the target point based on the measured second reflected waves.

Preferred embodiments and their advantages are further provided in the description and the dependent claims.

### Brief description of the drawings

The present invention will be discussed in more detail below, with reference to the attached drawings.
Fig. 1 shows a block diagram of a device according to the invention.
Fig. 2A-2E show examples of an ejector according to the invention.
Fig. 3A-3D show examples of a second sensor according to the invention.
Fig. 4 shows an example display according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

It will be understood that when an element (e.g., first element) is "connected to" or "(operatively or communicatively) coupled with/to" to another element (e.g., second element), the element may be directly connected or coupled to another element, and there may be an intervening element (e.g., third element) between the element and another element. To the contrary, it will be understood that when an element (e.g., first element) is "directly connected" or "directly coupled" to another element (e.g., second element), there is no intervening element (e.g., third element) between the element and another element.

The expression "configured to (or set to)" used in various embodiments of the present invention may be replaced with "suitable for", "having the capacity to", "designed to", "adapted to", "made to", or "capable of" according to a situation. The term "configured to (or set to)" does not necessarily mean "specifically designed to" in a hardware level. Instead, the expression "apparatus configured to..." may mean that the apparatus is "capable of..." along with other modules or parts in a certain situation. For example, "a processor configured to (or set to) perform A, B, and C" may be a dedicated processor, e.g., an embedded processor, for performing a corresponding operation, or a generic-purpose processor, e.g., a central processing unit (CPU) or an application processor (AP), capable of performing a corresponding operation by executing one or more software programs stored in a memory module.

It will be understood that each block of the block diagram and/or combinations of blocks in the block diagram, can be implemented by computer program instructions. These computer program instructions may be provided to a processor of a general-purpose computer, special purpose computer, or other programmable data processing apparatus, such that the instructions that are executed via the processor of the computer or other programmable data processing apparatus create means for implementing the functions/acts specified in the block diagram. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instruction means that implement the function/act specified in the block diagram. The computer program instructions may also be loaded onto a computer or other programmable data processing apparatus o cause a series of operational steps to be performed on the computer or other programmable apparatus to produce a computer implemented process such that the instructions that are executed on the computer or other programmable apparatus provide steps for implementing the functions/acts specified in block diagram.

Furthermore, the block diagram may illustrate parts of modules, segments, or codes including at least one or more executable instructions for performing specific logic function(s). Moreover, it should be noted that the functions of the blocks may be performed in a different order in several modifications. For example, two successive locks may be performed substantially at the same time or may be performed in reverse order according to their functions.

In this document, the term "module" means, but is not limited to, a software or hardware component, such as a Field Programmable Gate Array (FPGA) or Application Specific Integrated circuit (ASIC), which performs certain tasks. A module may advantageously be configured to reside on the addressable storage medium and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionalities of the components and modules may be combined into fewer components and modules or further separated into more components and modules. In addition, the components and modules may be implemented such that they execute one or more CPUs in the device or a secure multimedia card. In embodiments, a module may include one or more processors.

In this document, the term "golf putting device" refers to a portable or mobile device which may assist in the act of putting of a golf ball. The device may be configured to be changed from one state to another, which may refer to a transition between operational configurations or "modes" or "states", altering its behavior and/or functionality. In this document, the terms "mode" and state" are thereby interchangeable. Such change may relate to a trigger and may involve any of user input and/or a physical position or orientation of the device and/or a change in the position or orientation of the device. In embodiments, the change in device state is obtained by the device, or the processor, via an input module, which may comprise one or more buttons and/or an input display (e.g. the display as described herein), a dial, a microphone, a sensor, a camera, etc. In embodiments, the device is configured to change a software state and/or a physical state. Examples of software state changes include the following. For example, the device may comprise one or more buttons, such as a single button which may be pressed once, twice or three times to change the state of the device, or such as two or three buttons for changing the state of the device to the respective first, second or third state. In another example, the device may comprise a rotating dial which allows a user to select a particular state based on the rotation of the dial. In another example, the device may comprise a display having a graphical user interface which allows a user select one of the two or three states, such as by navigating a menu. In another example, the device may comprise a microphone configured to receive a voice command, wherein the voice command may relate to activating or changing a state. In another example, the device may be wirelessly connected to a user mobile device, such as a smartphone, a tablet, etc., which the user can input a command to change the state of the device. Examples of physical state changes include the following. For example, (a part of) the device may be rotated to switch between states, where the user may rotate (the part of) the device, aligning different indicators or sensor ports. In another example, the device may be flipped to its side, exposing the second sensor for swing speed determination, wherein the device may detect that the device has been flipped, by e.g., a button located on its side which is pressed by the weight of the device on the ground or by an accelerometer or gyroscope. When the device is flipped, the ejector may not be accessible, thereby forcing the device to change to the third state. In another example, (a part of) the device, such as a hinged panel could flipped open to expose the second sensor. In another example, sliding a compartment may expose the second sensor. In another example, a (latch-secured) door could open to provide access to internal components like the ejector. In another example, a first module containing a specific sensor or functionality (e.g., the ejector, the first sensor, the second sensor, etc.) may be attached or detached to change the device's state. In embodiments, the device is configured to change between the first state and the second state automatically, such that after the green speed is determined, the device determines the target distance and/or target speed and/or target orientation (herein referred to as "target distance/speed/orientation"). In embodiments, the device is configured to change between the second state and the third state automatically, such that after the device determines the target distance/speed/orientation, the device is configured to determine the swing speed.

In this document, "the device being changed between states" is interchangeable with "the switching between states".

In this document, the term "target point" is non-limiting and may relate to any point of interest, such as the putting hole or other point of interest, such as an intermediate point of interest along an expected golf ball trajectory. The point of interest may relate to a point in the vicinity of the putting hole, an auxiliary element in the vicinity of the putting hole, a flag in the vicinity of the putting hole. In embodiments, the point of interest relates to an element that is conveniently detectable (by the device and/or by visual inspection by the user, e.g., a flag) and/or conveniently able to reflect emitted waves, such as the first or second waves (e.g., an auxiliary element).

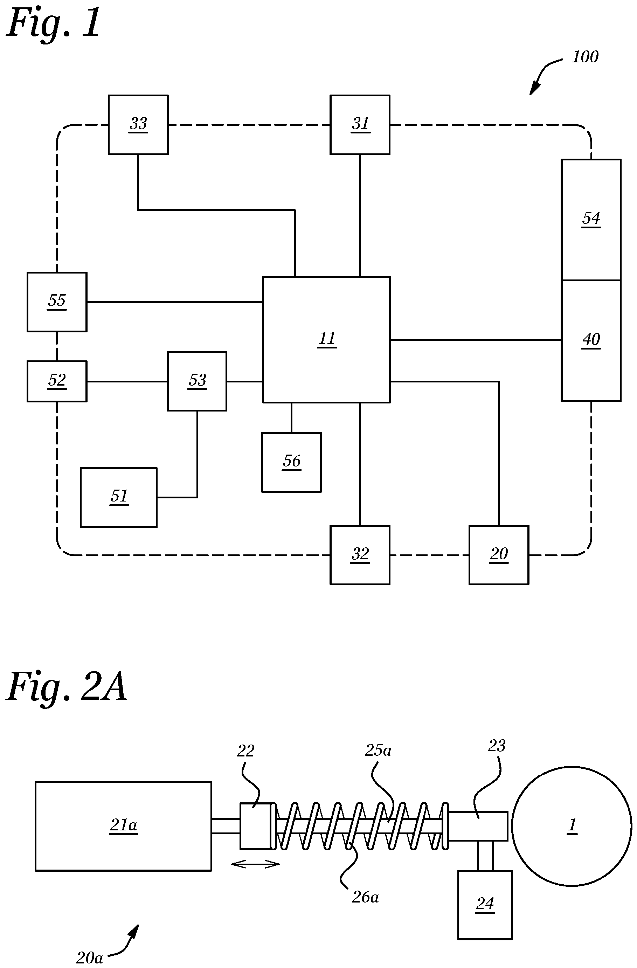

In this document, the term "ejector" refers to a mechanism, e.g., within the device or attached thereto, capable of ejecting or projecting or propelling a golf ball from the device, such as onto the golf course. The ejecting of the golf ball may relate to propelling or launching the golf ball with a controlled force and a controlled trajectory. The ejector may be configured to eject one or more golf balls, which may be depending on the state of the device. For example, in the first state, only one golf ball may be needed to determine the green speed, and in the second state, one golf ball may be needed to determine the target speed and/or orientation, and in some cases, more than one golf ball may be needed to adjust the target speed and/or orientation. Examples of the ejector are provided below with reference to Fig. 2A-2E.

In this document, "mmWave" may relate to a form of sensing, e.g., sensing with the first sensor and/or second sensor. This may relate to sensing using a mmWave radar sensor to measure any of movement and/or acceleration and/or angles. The accuracy may thereby be in the order of magnitude of 5 mm, less than 5 mm, 1 mm, less than 1 mm. It may relate to a mmWave radar sensor transmitting and receiving pulses of millimeter electromagnetic wave energy, detecting targets and motion from the reflections it receives back. This may allow to detect (x,y,z) position of a target with high accuracy.

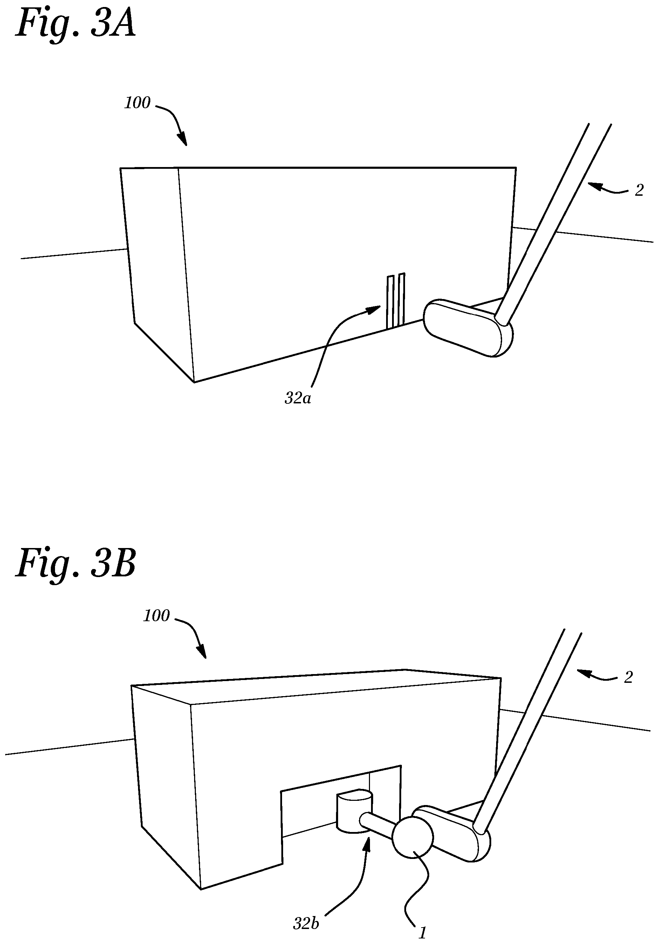

In this document, the term "sensor", such as a first sensor and a second sensor, refers to a sensor which may emit waves and measures the reflection of said waves, e.g., the said waves bounce off an object, such as a golf ball, a flag stick marker, a pin, a golf club, a putter club, a golf clubhead, a putter clubhead, etc., back to the sensor. The first sensor and/or the second sensor and/or a further sensor may be one of: a mmWave sensor, a Doppler (radar) sensor, an acoustic (ultrasound) sensor, an image (camera) sensor, a laser sensor, an infrared sensor, etc. Such first sensor and/or second sensor may relate to wireless sensing. The second sensor may relate to wired sensing, where the sensor is connected to an element which is struck by the clubhead, such as an arm. The second sensor may comprise or concern a force sensor configured to measure the force exerted by the clubhead on said arm, or on a golf ball attached to said arm (e.g., at one end). The arm may swing after being struck by the clubhead, thereby measuring the force exerted by the clubhead on the arm. The golf ball may stay attached to the arm after being struck but may alternatively be detached upon striking. Examples of the second sensor are provided below with reference to Fig. 3A-3D.

In this document, the term "waves" may relate to any or any combination of electromagnetic waves or acoustic waves (relating to actuation of an acoustic medium) or any other type of waves relating to actuation of an actuation medium. For instance, the waves may relate to visible light or infrared light or UV light or an electromagnetic spectrum that partially overlaps with visible light. In examples, the waves may relate to audible sound and/or ultrasound and/or infrasonic waves.

In embodiments, the first sensor may be a first sensor module and/or the second sensor may be a second sensor module.

In embodiments, the first sensor is configured to be pointing in a direction in which the golf ball is ejected.

In embodiments, the second sensor is configured to be pointing perpendicular to the direction in which the golf ball is ejected. Such perpendicular orientation may advantageously allow the user to flip the device to switch between one of the first and second state, on the one hand, and the third state, on the other hand. In related embodiments, the device thereby comprises means capable of detecting that the device is being flipped and/or capable of detecting that the device is in a flipped position, wherein such detection may be a trigger for the processor to switch state accordingly. Such embodiments may advantageously be combined with anchoring means according to pivotable attachment.

In embodiments, the first sensor is located at a first side of the device and the second sensor is located at a second side of the device which is perpendicular to the first side. Such perpendicular orientation may advantageously allow the user to flip the device to switch between one of the first and second state, on the one hand, and the third state, on the other hand. In such embodiments, the device may include means capable of detecting that the device is being flipped and/or capable of detecting that the device is in a flipped position, wherein such detection may be a trigger for the processor to switch state accordingly. Such embodiments may advantageously be combined with anchoring means according to pivotable attachment.

In embodiments, the first sensor is configured to be pointing in the same direction as the ejector. In embodiments, the first sensor and the ejector are located at the same side of the device. For example, in any of the device states, the first sensor is configured to be pointing in a direction in which the golf ball is ejected, and the second sensor is pointing to the ground or to the sky, while only in the third state, the second sensor is configured to be pointing in the direction of the golf club. In another example, in any of the device states, the first sensor is configured to be pointing in a direction in which the golf ball is ejected, and the second sensor is configured to be pointing in the direction of the golf club.

In embodiments, at least one of the first sensor and second sensor is a mmWave sensor. Alternatively, at least one of the first and second sensor is a doppler sensor, wherein ball tracking may relate to a dual doppler radar mechanism. Preferably, at least the first sensor is a mmWave sensor, wherein preferably ball tracking relates to mmWave-based ball tracking. Such technology may advantageously rely on short-wavelength electromagnetic waves (instead of the doppler effect) and may additionally allow to detect static objects. This may advantageously allow to use the first sensor being a mmWave sensor both for ball tracking and for detecting the distance to the target.

In embodiments, the first sensor and the second sensor may be the same, such as both sensors are mmWave or doppler sensors. Alternatively, the first sensor and the second sensor are different, such as the first sensor being a mmWave or doppler sensor and the second sensor being a laser sensor (e.g., a velocity sensor). This may allow the device to use a combination of sensors each of which having a particular advantage in the application used.

In this document, the term "golf club" may refer to any type of club used in golf, such as woods, irons, wedges, putters, or hybrids. The term "golf clubhead" may refer to a head of any type of club used in golf, such as woods, irons, wedges, putters, or hybrids.

In this document, the term "processor" may to refer to any processing means, such as a central processing unit. The term is used interchangeably with the term "control module", and expressions such as "the processor takes into account [x]" may be equivalent to "the control module is configured to determine a status and/or value for [x]". The processor may include a microprocessor (such as an MCU or a CPU), and/or a communication processor (CP), and/or a graphical processing unit (GPU). The processor may receive, e.g., an instruction from other elements (e.g., the memory, the I/O interface, the display, or the communication interface, etc.) via the bus, decipher the received instruction, and execute an operation or a data process corresponding to the deciphered instruction. In embodiments, the processor is configured to be connected to and/or to communicate with, e.g., via a bus, each of the other elements comprised in the device: the first sensor, the second sensor, the display, the input module, the power management module (e.g., any one or combination of the PMIC, the charger integrated circuit, and the battery), the indicator, the display, the audio signal generator, and the laser pointer. Thus, the processor may receive data from any one or combination of: the first sensor, the second sensor, the display, the input module, and the power management module (e.g., any one or combination of the PMIC, the charger integrated circuit, and the battery). The processor may transmit data to any one or combination of: the indicator, the display, the audio signal generator, the laser pointer, the power management module (e.g., any one or combination of the PMIC, the charger integrated circuit, and the battery). Said received and/or transmitted data may relate to the functionality and/or operation of the respective element comprised in the device.

In embodiments, the device comprises a memory. The memory may be a memory module. Preferably the memory is comprised in the control module; alternatively, it is provided as separate module connected at least to the control module. The memory may include any suitable type of volatile and/or non-volatile memory. The memory may store an instruction or data received from the processor or other elements (e.g., the I/O interface, the display, or the communication interface, etc.), or generated by the processor or other elements. The memory may include, e.g., programming modules such as a kernel, a middleware, an application programming interface (API), or an application. Each of the programming modules may be configured using a software, a firmware, a hardware, or a combination of two or more of these. The memory may include, for example, at least one of a volatile memory (e.g., dynamic random access memory (DRAM), static RAM (SRAM), synchronous dynamic RAM (SDRAM)) and a non-volatile memory (e.g., one time programmable read only memory (OTPROM), programmable ROM (PROM), erasable and programmable ROM (EPROM), electrically erasable and programmable ROM (EEPROM), mask ROM, flash ROM, NAND flash memory, NOR flash memory, etc.).

In embodiments, the device includes a bus. The bus may be a circuit for connecting elements of the device (e.g., the processor, the memory, the I/O interface, the display or the communication interface, etc.) with each other, and transferring communication (e.g., a control message) between the above-described elements.

In embodiments, the device comprises a kernel. The kernel may control or manage system resources (e.g., the bus, the processor, or the memory, etc.) used for executing an operation or a function implemented in the rest of the programming modules, e.g., the middleware, the API, or the application. Also, the kernel may provide an interface for allowing the middleware, the API, or the application to access an individual element of the electronic device and control or manage the same.

In embodiments, the device comprises a middleware. The middleware may perform a mediation role so that the API or the application may communicate with the kernel to give and take data. Also, in connection with task requests received from the application, the middleware may perform a control (e.g., scheduling or load balancing) for a task request using, e.g., a method of assigning priority that may use a system resource (e.g., the bus, the processor, or the memory, etc.) of the electronic device to at least one application.

In embodiments, the device comprises an API. The API may be an interface for allowing the application to control a function provided by the kernel or the middleware, and may include at least one interface or function (e.g., an instruction) for file control, window control, image processing, or character control, etc.

In embodiments, the device comprises an I/O interface. The I/O interface may transfer an instruction or data input from a user via an I/O unit (e.g., a sensor, a keyboard, or a touchscreen) to the processor, the memory, or the communication interface via the bus. For example, the I/O interface may provide data regarding a user's touch input via the touchscreen to the processor. Also, the I/O interface may, e.g., output an instruction or data received via the bus from the processor, the memory, or the communication interface via the I/O unit (e.g., a speaker or a display). For example, the I/O interface may output voice data processed by the processor to a user via a speaker.

In embodiments, the device comprises a display. The display may include, e.g., a liquid crystal display (LCD), a light emitting diode (LED) display, an organic LED (OLED) display, a micro electromechanical system (MEMS) display, or an electronic paper display. The display may display various types of contents (e.g., text, images, videos, icons, or symbols) for users. The display may include a touch screen, and may receive, e.g., a touch, gesture, proximity, or hovering input by using an electronic pen or a part of the user's body.

In embodiments, in the first state, the display is configured to display the determined green speed. In embodiments, in the second state, the display is configured to display the determined target distance and/or target orientation. The display may be configured to display instructions to orient the device based on the determined target orientation. For example, displaying an angle for rotating the device. In embodiments, in the third state, the display is configured to display the determined swing speed and/or the determined virtual distance and/or the determined swing orientation. The display may be configured to display instructions to adjust the swing speed and/or swing orientation of the user. For example, displaying the swing speed and instructions to increase the swing speed by a difference to the determined green speed, and displaying the swing orientation and an (positive or negative) angle for adjusting the swing orientation, such as twisting the golf club by said angle.

In embodiments, in the third state, the processor is configured to determine a perceived distance of the user based on the determined target distance, the determined grass speed, and a preferred grass speed by the user. The preferred grass speed may be determined by the processor based on historically determined green speeds. For example, the preferred green speed is the green speed which the user has practiced the most on (e.g., the green speed which has been determined most for the user). The preferred grass speed may be provided by the user, e.g., via the GUI or the I/O interface. In embodiments, the display is configured to display the determined perceived distance.

In embodiments, the device comprises a communication interface. The communication interface may connect communication between the device and an external device (e.g., a mobile device, a smartphone, a tablet, a personal computer, a server, etc.). For example, the communication interface may be connected to a network through wireless communication or wired communication and may communicate with the external device. The communication interface (e.g., a communication module) may perform data transmission/reception in communication between the device and other electronic devices connected via a network. In embodiments, the communication module may include any one or combination of a cellular module, a Wi-Fi module, a Bluetooth (BT) module, a GPS module, a near field communication (NEC) module, a radio frequency (RF) module, a universal serial bus (USB), a high-definition multimedia interface (HDMI), etc.

In embodiments, the device comprises an audio signal generator configured to output at least one audio signal. Preferably, the audio signal generator is configured to output a plurality of audio signals. The audio signal generator may refer to an audio module. The audio signal generator or the audio module may convert a sound and an electric signal in dual directions. At least a partial element of the audio module may be included, for example, in the I/O interface. The audio module may process sound information input or output via, for example, a speaker, a receiver, an earphone, or a microphone, etc.

In embodiments, the audio signal generator is configured to output a plurality of audio signals, wherein, in the second state, the audio signal generator is configured to output a first plurality of audio signals relating to a first moment the second golf ball is ejected by the ejector, a third moment when the second golf ball stops, and a second moment half-way between the first and second moments, based on the second predetermined speed.

In embodiments, in the third state, the audio signal generator is configured to output a second plurality of audio signals relating to a first moment the virtual golf ball is swung, a third moment when the virtual golf ball stops, and a second moment half-way between the first and second moments, based on the determined swing speed.

In embodiments, the second sensor comprises at least one laser sensor configured to emit laser light waves. The at least one laser sensor may project any one or combination of at least one point, at least one line, at least one cross, etc. For example, each laser sensor projects any one or combination of a point, a line, and a cross. In another example, two laser sensors project each a line perpendicular to the other forming a cross.

In embodiments, the device comprises a power management module. The power management module may manage power of the device. The power management module may include, for example, a power management integrated circuit (PMIC) and/or a charger integrated circuit, and/or a battery and/or a battery gauge.

In embodiments, the device comprises one or more indicators. The indicator may include, e.g., a light emitting diode (LED), a liquid crystal display (LCD), an electroluminescent panel, a series of LEDs arranged in a pattern, or a combination thereof. The one or more indicators may indicate various types of information to the user (e.g., numerical values, symbols, color-coded alerts, or visual patterns) such as: battery level (e.g., indicating remaining power using a series of illuminated LEDs or a progress bar), state selection (e.g., using different colored LEDs or a backlit symbol to show the current device state (first, second or third state), sensor readings (e.g., displaying numerical values for green speed, target distance/speed/orientation, swing speed, etc.), feedback signals (e.g., providing visual cues during use, such as flashing or green LEDs to signal successful swing speed, solid red LEDs to signal too high swing speed, solid yellow LEDs to signal too low swing speed). In embodiments, the feedback signals comprise instructions for adjusting the swing speed of the user, such that the determined swing speed would match the second predetermined speed and/or the determined virtual distance matches the determined target distance. In embodiments, the one or more indicators concern the display.

In embodiments, in the third state, the processor is configured to determine a virtual distance travelled by a virtual golf ball based on the determined swing speed. Additionally, or alternatively, in the third state, the processor is configured to determine a swing speed and/or a swing orientation of the golf clubhead. In embodiments, the one or more indicators or the display is configured to indicate or display the determined virtual distance. Additionally, or alternatively, the one or more indicators or the display is configured to indicate or display the determined swing speed and/or swing orientation. In embodiments, the feedback signals comprise instructions for adjusting the swing speed and/or the swing orientation of the user, such that the determined swing speed would match the second predetermined speed and/or the determined virtual distance matches the determined target distance and/or the determined virtual orientation matches the determined target orientation.

In embodiments, in the third state, the first sensor is configured to measure fourth reflected waves reflected from a third golf ball which has been swung by the user, the processor is configured to determine a second distance travelled by the third golf ball based on the measured fourth reflected waves, and the display configured to display the determine swing speed and/or second distance.

In embodiments, the device is configured for projecting a visible line on the ground up to the hole to aid alignment. This line is preferably generated by a laser (or laser pointer) that remains visible at distances over at least 20 meters. The laser is preferably red for optimal visibility and is preferably classified as Class 1.

In embodiments, the device comprises a laser pointer. The laser pointer preferably generates a visual mark visible at distances over at least 20 meters. The laser is preferably red for optimal visibility and is preferably classified as Class 1.

In embodiments, the laser pointer may be configured to project a light projection onto the grass. The light projection may be any one or combination of a point, a line, a plurality of parallel lines, a cross, etc. In embodiments, in the second state, the device is configured to be oriented, such that the projected point coincides with the target point, or the projected line aligns with the target point, or the center line of the parallel lines align with the target point, or the projected cross coincides with the target point at the center point of the cross, etc.

In embodiments, in a state, preferably at least the second state, the laser pointer may be configured to project a light projection onto the grass, e.g., a line or a cross, with a negative offset based on the determined target orientation. The device may be rotated such that the light projection aligns or coincides with the target point.

In embodiments, the device may comprise a ramp onto which the golf ball is ejected. This may allow the golf ball to be more reliably oriented and/or ejected from the device.

In embodiments, the device comprises means for anchoring the device. This may relate to means for temporary anchorage, e.g., means for anchorage only at the ball start, such as one or more spikes. In embodiments, this may furthermore relate to means for anchoring the device to the ground according to a pivoting attachment. Such pivoting attachment may advantageously allow to flip the device (according to one degree of freedom) without changing its orientation (according to the other degrees of freedom). In example embodiments, the means for anchorage according to a pivoting attachment relate to two tees.

In embodiments, the device is waterproof. This may relate, e.g., to the device comprising an IP65 rated enclosure.

In embodiments, the ejector is based at least partly, preferably entirely, on a pinball mechanism. This may relate to the pinball mechanism of Example 1.

In embodiments, the ejector is based at least partly, preferably entirely, on a solenoid mechanism. This may relate to the solenoid mechanism of Example 2.

In embodiments, the ejector is based at least partly, preferably entirely, on a motor-and-hammer mechanism. This may relate to the motor-and-hammer mechanism of Example 3.

In embodiments, the ejector is based at least partly, preferably entirely, on a flywheel mechanism. This may relate to the flywheel mechanism of Example 4.

In embodiments, the ejector is based at least partly, preferably entirely, on a belt-driving mechanism. This may relate to the belt-driving mechanism of Example 5.

In embodiments, the ejector is based at least partly, preferably entirely, on a semi-toothed-wheel mechanism. This may relate, e.g., to a semi-toothed wheel that is preferably driven by a small DC motor, possibly interfacing with the semi-toothed wheel via one or more intermediate gears. In a specific example embodiment, this relates to an example assembly comprising a driving spindle provided on the DC motor and actuating a first wheel which in turn drives a second wheel which in turn drives a fully-toothed rim provided on the semi-toothed wheel. Thereby, the semi-toothed wheel comprises, apart from the fully-toothed rim, also a semi-toothed rim. Within this assembly, the semi-toothed rim is used to drive a rack that comprises a spring. Once the spring is fully compressed, the toothed wheel reaches its smooth section, briefly releasing the rack, which then propels the ball. Such an assembly may be combined with further parts, e.g., a second motor operating a worm screw to adjust the spring and achieve the desired force. An advantage of such an assembly, possibly combined with further parts, is that the shape and the materials for the gears and the spring may be simple (plastic, metal, 3D printable material) and may thus be easily producible, allowing convenient maintenance/replacement.

In embodiments, the processor relates to a System on Module (SoM). In other embodiments, the processor relates to a pair of microcontroller units (MCUs). Embodiments with SoM may provide advanced processing capabilities, and may relate to a firmware image that may be updated, e.g., over WiFi. On the other hand, embodiments with the MCUs may be more cost-effective, be associated with a smaller firmware image, and may allow for updates via Bluetooth. When compared to MCU, embodiments with SoM may provide better image processing capabilities and support high-resolution screens.

In embodiments, the screen is a touch screen. In other embodiments, the screen is an LCD screen not provided with touch screen capability, possibly combined with one or more physical buttons for allowing user input.

In embodiments, to enhance user interactions, the need for users to bend down to press the screen or buttons is avoided. In example embodiments, the device comprises a distance sensor configured to detect the user's hand. This may allow the user to input a distance value by moving their hand closer to or farther away from the device, removing the need to bend over and avoiding the inconvenience of carrying a remote control or smartphone. This approach is particularly appealing for golfers who prefer to remain "disconnected" while playing.

In embodiments, the processor takes into account how the golf ball is ejected by the ejector, such that any element or factor which influences the speed of the golf ball after it has been ejected is taken into account. Therefore, the processor may reduce or increase the speed at which the ball is ejected based on the predetermined speed, such as a percentage of the predetermined speed, e.g., 10%, 20%, 30%, 40%, 50%, 60%, 70% 80%, 90%, 110%, 120%, 130%, 140%, 150%, etc. For example, the golf ball is ejected onto a ramp which is a concave curve or a downward sloping ramp and may increase the speed of the golf ball and possibly introduce a projection of the golf ball off the ramp at an angle which is based on the speed at which the golf ball is ejected and the slope of the ramp. Thus, the processor may determine to reduce the ejection speed of the golf ball based on the predetermined speed and the slope of the ramp. In another example, the golf ball is ejected onto a ramp which is a convex curve or an upward sloping ramp and may decrease the speed of the golf ball and possibly introduce a projection of the golf ball off the ramp at an angle which is based on the speed at which the golf ball is ejected and the slope of the ramp. Thus, the processor may determine to increase the ejection speed of the golf ball based on the predetermined speed and the slope of the ramp. In another example, the golf ball may be ejected, such as where the ejector resembles a golf club with golf clubhead which ejects the golf ball at an upward trajectory such that the golf ball is projected at an initial angle with the ground.

With reference to Fig. 1, example embodiments of the golf putting device according to the invention will be described, without the invention being limited thereto. Fig. 1 shows a block diagram of these example embodiments. The golf putting device 100 comprises the processor 11, the first sensor 31, the second sensor 32, the indicator 55, the display 40, the input module 54, the audio signal generator 56, the laser pointer 33, and the power management module which includes the PMIC 52, the charger integrated circuit 53, and the battery 51. A shown in Fig. 1, the processor 11 is connected to and/or communicates with each of the other elements comprised in the device 100, e.g., via a bus. Thus, the processor 11 may receive data from any one or combination of: the first sensor 31, the second sensor 32, the display 40, the input module 54, the PMIC 52, the charger integrated circuit 53, and the battery 51. The processor 11 may transmit data to any one or combination of: the indicator 55, the display 40, the audio signal generator 56, the laser pointer 33, the PMIC 52, the charger integrated circuit 53, and the battery 51. Said received and/or transmitted data may relate to the functionality and/or operation of the respective element comprised in the device 100.

In embodiments, the (computer-implemented) method comprising the steps of:
- obtaining measured first reflected waves reflected from an ejected first golf ball, wherein the first golf ball is ejected at a first predetermined speed,
- determining a green speed based on the first predetermined speed of the ejected first golf ball and the measured first reflected waves,
- obtaining measured second reflected waves reflected from a target point, and
- determining a target distance to the target point based on the measured second reflected waves.

In embodiments, the method comprises any of the further steps performed by processor, such as any or any combination of determining the first distance, determining the target speed, determining the target height, determining the target orientation, adjusting the determined target speed, adjusting the determined target orientation, determining the swing speed, determining the virtual distance, etc. This may relate to any of the first, second or third mode. In embodiments, this relates to a fourth mode.

### Examples

Example embodiments of the invention will be described with reference to Fig. 2A-2E, Fig. 3A-3D, and Fig. 4, which are not intended to limit the scope of the invention in any way.

### Example 1: example of an ejector according to the invention

This example is described with reference to Fig. 2A and relates to a pinball mechanism. In this example according to embodiments of the invention, the golf putting device in a first state and/or a second state and/or a third state. The device comprises an ejector 20a. In the first state, the ejector 20a is configured to eject a golf ball 1 at the first predetermined speed. In the second state, the ejector 20a is configured to eject the golf ball 1 at the second predetermined speed. In the third state, the ejector 20a is configured to eject the golf ball 1 at the target speed.

The ejector 20a may be related to a pinball mechanism, wherein the ejector 20a comprises a rod within a tension spring which propels a golf ball 1 when the rod is pulled back and released. Particularly, the ejector 20a comprises a compression spring 26a, a thread or a (worm) screw 25a, a carriage 22, a pin 23 mounted to the spring 26a, an electromagnet 24, a motor 21a (e.g., a stepper motor or a DC motor) which is configured to adjust the tension of the spring 26a by turning the worm screw 25a and thereby moving the carriage 22. Once the spring 26a is compressed to a predetermined compression value, the electromagnet 24 (e.g., a solenoid) is configured to release the pin 23 to be propelled to the golf ball 1, thereby ejecting the golf ball 1 at the first and/or second predetermined speed. The predetermined compression value may be related to the first and/or second predetermined speed at which the golf ball 1 is to be ejected.

Alternatively, the compression spring 26a and the thread or (worm) screw 25a may be replaced by a motor mounted on a rack or driving a belt.

In this example, the golf ball 1 may be lying on the ground, or may be within the golf putting device, or may be lying on a ramp. In each of these cases, but not limited thereto, the processor comprised in the golf putting device may take into account how the golf ball 11 is ejected by the ejector 21a, such as taking into account the golf ball 1 may have no angle with the ground, or may roll on the ramp (at predetermined angle(s)), or may have an initial angle of ejection (from within the device). For example, in the case of the ramp, the processor may adapt the speed at which the golf ball 1 is ejected taking into account the speed difference created by the ramp. For instance, the ramp is a concave curve which may increase the speed of the golf ball 1 and introduce a projection of the golf ball 1 off the ramp at an angle which is based on the speed at which the golf ball 1 is ejected. Therefore, the golf ball 1 may be ejected at a speed which is based on the predetermined speed, such as a percentage of the predetermined speed.

### Example 2: example of an ejector according to the invention

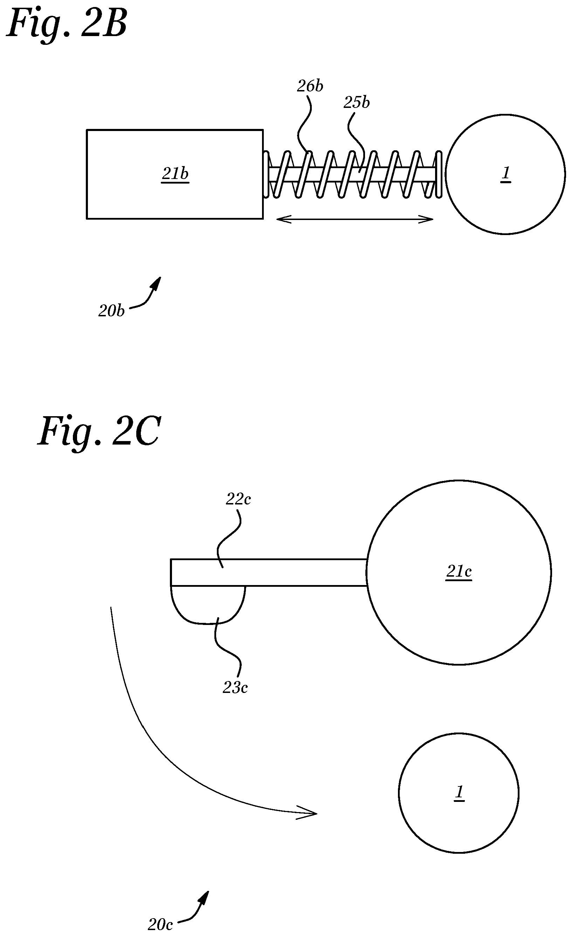

This example is described with reference to Fig. 2B and relates to a solenoid mechanism. Thereby, a solenoid may relate to any electromagnet or equivalent means, e.g. a means comprising a coil of wire, a housing and a moveable plunger (armature). In this example according to embodiments of the invention, the golf putting device may be in the first state and/or the second state and/or the third state. The device comprises an ejector 20b. In the first state, the ejector 20b is configured to eject the golf ball 1 at the first predetermined speed. In the second state, the ejector 20b is configured to eject the golf ball 1 at the second predetermined speed. In the third state, the ejector 20b is configured to eject the golf ball 1 at the target speed.

The ejector 20b comprises a compression spring 26b, a rod 25b, and an electromagnet 21b. The electromagnet 21b is configured to pull the rod 25b backwards, thereby compressing the spring 26b. The predetermined compression value may be related to the first and/or second predetermined speed at which the golf ball 1 is to be ejected, which may be based on a voltage applied to the electromagnet 21b. Once the spring 26b is compressed to the predetermined compression value, the electromagnet 21b is configured to release the rod 25b and strike the golf ball 1, thereby ejecting the golf ball 1 at the first and/or second predetermined speed.

The processor as described in Example 1 may be similar to the processor comprised the golf putting device in this example, wherein the processor may take into account how the golf ball 1 is ejected by the ejector 21b when determining the target speed and/or orientation and/or when controlling the electromagnet 21b.

### Example 3: example of an ejector according to the invention

This example is described with reference to Fig. 2C and relates to a motor-and-hammer mechanism. In this example according to embodiments of the invention, the golf putting device in the first state and/or the second state and/or the third state. The device comprises an ejector 20c. In the first state, the ejector 20c is configured to eject the golf ball 1 at the first predetermined speed. In the second state, the ejector 20c is configured to eject the golf ball 1 at the second predetermined speed. In the third state, the ejector 20c is configured to eject the golf ball 1 at the target speed.

**The** ejector 20c comprises a lever 22c, a motor 23c (e.g., a DC motor) at one end of the lever 22c, and a mass 21c at the other/opposite end of the lever 22c, wherein the motor 23c is configured to drive the mass 21c (acting as hammer) and strike the golf ball 1 at the first and/or second predetermined speed which may be based on the voltage applied to the motor. The ejector 20c may resemble a golf club, wherein the mass 21c resembles a golf clubhead. The mass 21c may be heavier than the golf ball 1.

The processor as described in Example 1 or Example 2 may be similar to the processor comprised the golf putting device in this example, wherein the processor may take into account how the golf ball 1 is ejected by the ejector 21c when determining the target speed and/or orientation and/or when controlling the motor 23c.

### Example 4: example of an ejector according to the invention

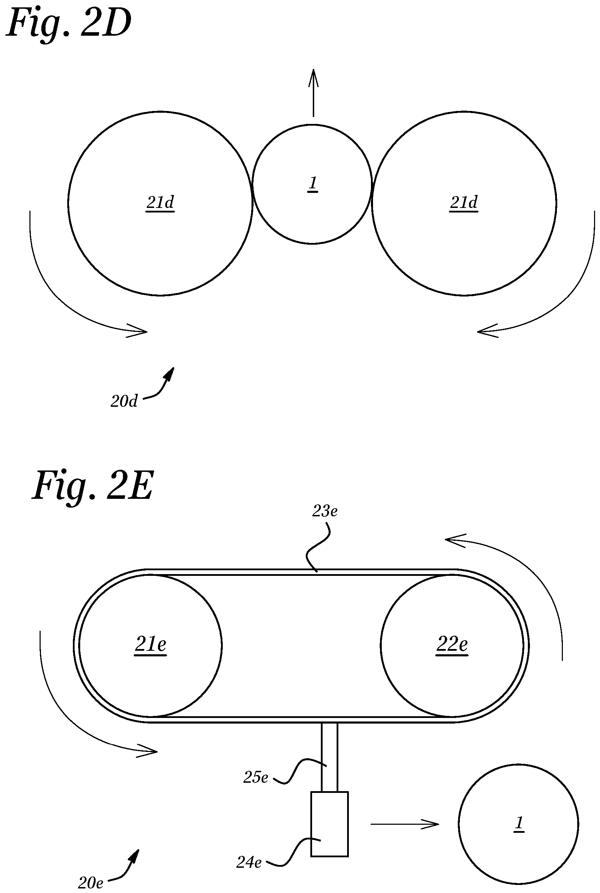

This example is described with reference to Fig. 2D and relates to a flywheel mechanism. In this example according to embodiments of the invention, the golf putting device in the first state and/or the second state and/or the third state. The device comprises an ejector 20d. In the first state, the ejector 20d is configured to eject the golf ball 1 at the first predetermined speed. In the second state, the ejector 20d is configured to eject the golf ball 1 at the second predetermined speed. In the third state, the ejector 20d is configured to eject the golf ball 1 at the target speed.

The ejector 20d comprises two motors (e.g., DC motors or step motors), wherein each of the motors drives a respective wheel 21d to propel a golf ball 1 therebetween. The motors rotate the respective wheel at opposite directions, thereby propelling the golf ball 1 tangentially in the direction of rotation of the wheels 21d.

**As** shown in Fig. 2D, the golf ball 1 is propelled in between the two wheels 21d and ejected tangentially by the rotational forces of the wheels 21d. The ejection speed of the golf ball 1 is based on the rotational speed of the wheels 21d, which is based on the voltage applied to the respective motor, which is based on the first and/or second predetermined speed.

**An** advantage of this ejector 20d is that the rotational speed of each of the wheels 21d may be different for introducing a spin to the golf ball 1. The spin may be determined by the processor based on the rotational speeds of the wheels 21d and taken into account when determining the target speed of the golf ball 1 and potentially the target orientation. The processor may take into account the spin of the golf ball 1 when determining the target speed and/or orientation and/or when controlling the motors 21d.

### Example 5: example of an ejector according to the invention

This example is described with reference to Fig. 2E and relates to a belt-driving mechanism. In this example according to embodiments of the invention, the golf putting device in the first state and/or the second state and/or the third state. The device comprises an ejector 20e. In the first state, the ejector 20e is configured to eject the golf ball 1 at the first predetermined speed. In the second state, the ejector 20e is configured to eject the golf ball 1 at the second predetermined speed. In the third state, the ejector 20e is configured to eject the golf ball 1 at the target speed.

The ejector 20e comprises a (concentric) cable 23e, a rod 25e, a mass 24e attached onto one end of the rod 25e, wherein the other end of the rod 25e is attached to the cable 23e, and two motors (e.g., DC motors or step motors) located within the concentric cable 23e. Wherein each of the motors drives a respective wheel 22e within the concentric cable 23e to rotate the cable 23e. The motors rotate the respective wheel in the same direction, thereby rotating the cable 23e and the rod 25e attached thereto. The mass 24e being attached to the rod 25e rotates and strikes the golf ball 1. The ejector 20e may resemble a golf club, wherein the mass 24e resembles a golf clubhead. The mass 24e may be heavier than the golf ball 1.

### Example 6: example of a golf putting device according to the invention

**This** example is described with reference to Fig. 3A and relates to user shot calibration with sensing of velocity. In this example according to embodiments of the invention, the golf putting device 100 is in the third state. The golf putting device 100 comprises a second sensor 32a consisting of two laser sensors. In variants of the example, the second sensor 32a comprises at least one laser sensor. As shown in Fig. 3A, the second sensor 32a comprises two laser sensors.

The club 2, particularly the clubhead is detected by the second sensor 32a, when the clubhead faces the second sensor 32a. Each of the laser sensors is configured to emit laser light waves and measure a reflection of said emitted laser light waves off the clubhead.

Each of the laser sensors is configured to measure the laser light wave reflections of the golf clubhead being swung by the user, and the processor is configured to determine a swing speed of the golf clubhead based on the measures third wave reflections.

By using two laser sensors, the processor may advantageously determine the time difference between the club detection on each laser sensor. This may provide for swing speed determination with high accuracy.

**The** second sensor 32a may thereby advantageously be used to project one or more laser points or lines to indicate a location or position of a virtual golf ball to be struck (not shown).

### Example 7: example of a golf putting device according to the invention

**This** example is described with reference to Fig. 3B and relates to user shot calibration with a real ball. In this example according to embodiments of the invention, a golf putting device 100 is in the third state. The golf putting device 100 comprises a second sensor 32b. The second sensor 32b comprises or is connected to an element which is struck by the clubhead, such as an arm. The second sensor 32b comprises or concerns a force sensor configured to measure the force exerted by the clubhead on said arm and/or on a golf ball 1 attached to said arm, (e.g., at one end).

In this example, the arm can swing after being struck by the clubhead, thereby measuring the force exerted by the clubhead on the arm. The golf ball may stay attached to the arm after being struck but may alternatively be detached upon striking. Measurement of force may relate to a magnetic encoder on a pivot axle with a small rotary spring.

By using such contact-based sensing (as opposed to a wireless sensing), particularly with attaching the golf ball 1 to the second sensor 32b, the processor can more effectively determine how the force is translated from the clubhead to the golf ball 1. Furthermore, this can provide the user with real physical feedback on the swing speed by actually striking the golf ball 1.

### Example 8: example of a golf putting device according to the invention

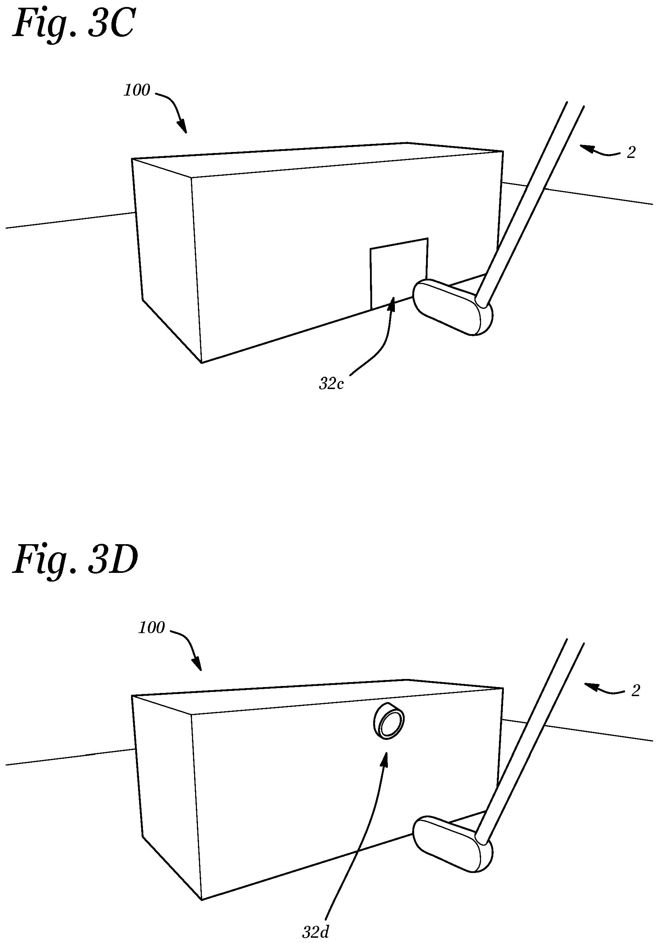

This example is described with reference to Fig. 3C and relates to user shot calibration with a radar. In this example according to embodiments of the invention, the golf putting device 100 in the third state. The golf putting device 100 comprises a second sensor 32c being a millimeter wave (mmWave) sensor. The sensor allows accurate sensing of movement of the (x,y,z) club position.

### Example 9: example of a golf putting device according to the invention

**This** example is described with reference to Fig. 3D and relates to user shot calibration with vision. In this example according to embodiments of the invention, the golf putting device 100 is in the third state. The golf putting device 100 comprises a second sensor 32d comprising (or being) a camera. Using the camera and computer vision the club's movement is analyzed by the processor frame by frame.

### Example 10: example of ball tracking

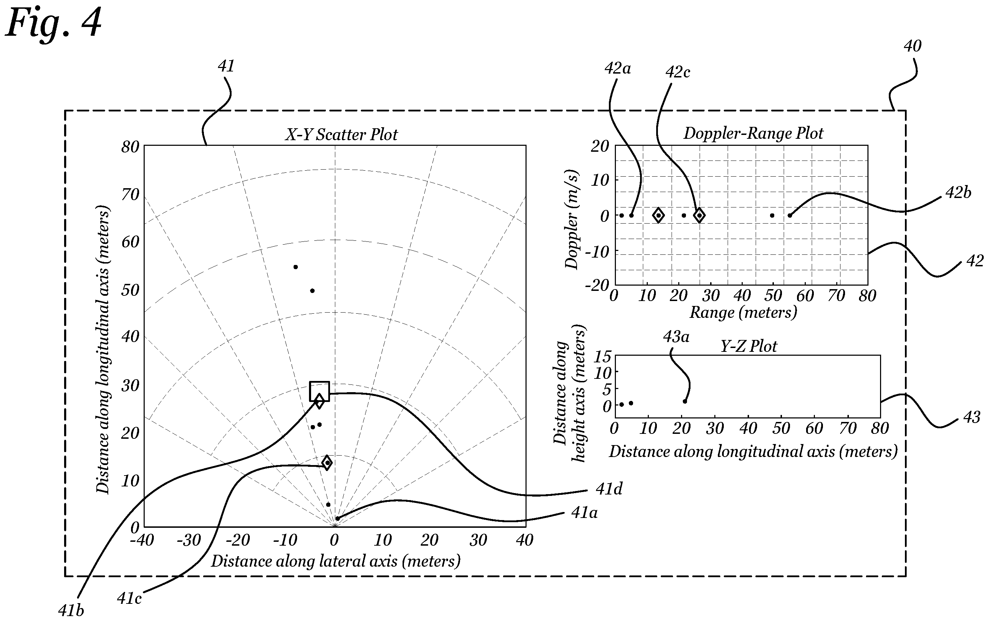

Fig. 4 shows an example display 40 according to the invention relating to mmWave-based ball tracking, relating to elements 41, 41a-41d, 42, 42a-42c, 43 and 43a.

This may relate to any of the first and second state, with the first sensor comprising or being a mmWave radar. Thereby, mmWave technology for ball tracking may be an advantageous choice particularly in view of the particular distances involved, as an alternative or even preferred choice over doppler radar systems for the given application. Instead of relying on the Doppler effect, mmWave relies on short-wavelength electromagnetic waves. Conveniently, this technology is also able to detect static objects allowing to measure the distance to the hole's target. Fig. 4 thereby illustrates an example interface for ball tracking, illustrating both mmWave-based ball tracking (omitting reference to Doppler) and Doppler-based ball tracking.

For instance, an X-Y scatter plot 41, a range plot 42 (or Doppler-range plot) and a Y-Z plot 43 may be displayed on the display on the device or on an app on an external device (e.g., smartphone or tablet or smartwatch) coupled to the device. The X-Y scatter plot 41 displays the distribution of (x,y) positions 41a-41d of different golf ball positions in the lateral-longitudinal plane, indicating distances along these axes, along with radial grid lines to estimate total distance travelled. The range plot 42 shows speeds (e.g. ball speeds, or swing speeds) relative to the range travelled by the ball, with specific markers 42a, 42b, and 42c highlighting the detected speeds. The Y-Z plot 43 represents a value relating to the ball's height or height difference (e.g., height difference between start point and end point, or maximum height attained during flight relative to start point) set out against the distance along the longitudinal axis, with, e.g., sample point 43a. Together, the X-Y scatter plot 41, the range plot 42 and the Y-Z plot 43 provide a detailed view on 3D propagation of the ball. In variants of this example (not shown), the example display 40 only comprises one of the X-Y scatter plot 41, the range plot 42 and the Y-Z plot 43. In yet other variants of this example (not shown), the example display 40 only comprises the X-Y scatter plot 41 and the range plot 42, or only the X-Y scatter plot 41 and the Y-Z plot 43, or only the range plot 42 and the Y-Z plot 43.

### Example 11: example of device according to the invention

In this example, a detailed overview is given of a range of features of an example embodiment of the invention. It is not intended to limit the invention in any way.

The device of this example features a sleek, modern, and rugged design, making it suitable for outdoor use.

It includes a ball launch mechanism capable of ejecting a ball with adjustable force and speed, controlled by the processor. The device launches balls to distances ranging from 2 to 20 meters on a slow green (4.5 ft). The mechanism achieves high precision, with a repeatability of less than 10 cm, preferably less than 5 cm, for distances between 2 and 20 meters on the same surface. The ball is launched in a direction perpendicular to the device, without spin, and with lateral deviations of no more than 10 cm, preferably no more than 5 cm, for a 10-meter strike. The ball is struck at its center, tangentially to the ground.

The power system integrates an internal, rechargeable battery. A USB-C port is used for charging, and the device operates independently for at least two hours, preferably at least four or six hours, covering at least one training session with 100 strikes, preferably at least three training sessions with 100 strikes. The battery is designed to fully recharge within one hour.

**A** touchscreen interface allows users to interact with the device by setting parameters, selecting states, and receiving feedback. The screen measures, e.g., 2.5 inches or 3 inches or 3.5 inches (3.5 inches corresponding to 8.51 cm diagonal) with a resolution of at least 0.1 megapixel, preferably at least 720p. In variants of the example, the screen uses capacitive touch technology.

The device projects a visible line on the ground up to the hole to aid alignment. This line is generated by a laser that remains visible at distances over 20 meters. The laser is red for optimal visibility and is classified as Class 1, requiring no special safety precautions.

For green speed measurement, the device calculates speed by ejecting a ball at a known velocity and measuring the distance it travels. It measures the ball's position from 1 to 4 meter with a total repeatability of 10 cm, sufficient for distinguishing green speed categories.

In the (non-mandatory, optional) putt calibration state, the device measures the distance and slope to the hole, enabling calibration for successful putts. Users can orient the device freely with their foot and adjust distance settings via buttons. It accounts for green speed and slope to determine the required force for a successful putt. A golf club can be used to place the ball, sparing the user from bending down.

Following the putt calibration state, a (non-mandatory, optional) guided practice state helps users replicate the force and angle of successful putts. The device provides feedback on whether the user's practice putt generates the appropriate force.

To enhance training, the device emits a sound pattern indicating shot cadence. Beeps mark the moment of impact, the midpoint of the ball's trajectory, and its arrival at the hole. The sound is audible within 10 meters but designed to avoid disturbing others.

The device measures the user's golf club speed, offering guidance for replicating the appropriate strike force. The sensor detects movements as close as 2 cm from the device, providing precise feedback, such as differentiating between a 10-meter and 10.05-meter strike. The device remains stable during use, even if lightly struck, and includes means to anchor it securely.

**Controls** include an on/off button and a red launch button with an LED indicator to signal readiness. A status LED shows the device's charge level.

For connectivity, in variants of this example, the device supports Bluetooth (and/or Wi-Fi) for integration with smartphones and software updates.

**A** foldable targeting card is securely held by the device, enabling precise aiming at the flag.

The device includes a user calibration system to fine-tune its performance based on individual needs.

The enclosure has an IP65 rating, protecting the device from low-pressure water jets. It is designed to comply with airline carry-on restrictions, featuring a battery capacity of less than 100Wh. Its dimensions are with maximum dimension about 300 mm or less than 300 mm or about 280 mm or less than 280 mm or about 260 mm or less than 260 mm or about 200 mm or less than 200 mm. The ratio of largest dimension over one-but largest dimension is at least 3:2 or about 2:1. For instance, the dimensions are 300x150x100 mm. This allows it to fit into a golf bag pocket. The weight is preferably below 7 kg, more preferably below 5 kg. The device has to be compact enough to fit into the pocket of a golf bag for convenient storage. Its width has to be sufficient to provide ample space for the golf club during strike training (state 3). Additionally, the device has a slight angle at the corner to help guide the club and minimize the risk of strong collisions. The device has a working temperature range of 5°C to 40°C and can be stored in temperatures between 0°C and 50°C. It also has the durability to resist potential wear and tear.

### (End of Example 11)

Although the present invention has been described above with reference to certain embodiments thereof, it will be evident that various modifications and changes may be made to these embodiments without departing from the broader scope of the present invention, as defined by the appended claims. For instance, while reference is made to embodiments wherein the device switches between states, in other embodiments, the device is not configured to be changed between states, and instead is configured for operating in a single state. This may relate to single-state operation according to any of the first state, the second state, the third state and a fourth state. The fourth state may relate, e.g., to determining one or more parameters or quantities, relating to the ball trajectory and/or properties of the terrain and/or properties of the user and/or properties of the golf club. In other examples, the fourth state may relate, e.g., to ejecting a ball based on custom and/or manual user input.

## Claims

1. A golf putting device (100) comprising:
- an ejector (20) configured to eject a golf ball;
- a first sensor (31) configured to emit first waves and measure a reflection of said emitted first waves; and
- a processor (11),
wherein the device (100) is configured to be changed between:
a first state in which the ejector (20) is configured to eject a first golf ball at a first predetermined speed, the first sensor (31) is configured to measure first reflected waves reflected from the ejected first golf ball, and the processor (11) is configured to determine a green speed based on the first predetermined speed of the ejected first golf ball and the measured first reflected waves, and
a second state in which the first sensor (31) is configured to measure second reflected waves reflected from a target point, the processor (11) is configured to determine a target distance to the target point based on the measured second reflected waves, and the ejector (20) is configured to eject a second golf ball at a second predetermined speed based on the determined green speed and the determined target distance.

2. The device according to claim 1, wherein, in the first state, the processor (11) is configured to determine a first distance travelled by the first golf ball based on the measured first reflected waves, wherein the green speed is determined based on the determined first distance.

3. The device according to claim 1 or 2, wherein the first sensor relates to mmWave-based sensing.

4. The device according to claims 1-3, wherein, in the second state, the processor (11) is configured to determine a target speed as the second predetermined speed for the second golf ball to reach the target point, based on the determined green speed and the determined target distance.

5. The device according to claim 4, wherein, in the second state, the processor (11) is configured to determine a target height of the target point based on the measured second reflected waves, wherein the target speed is determined based on the determined target height.

6. The device according to claim 5, wherein, in the second state, the processor (11) is configured to determine a target orientation for the second golf ball to reach the target point, based on the determined target height, wherein the target speed is determined based on the determined target orientation.

7. The device according to any one of claims 4-6, wherein, in the second state, the first sensor (31) is configured to measure third reflected waves from the ejected second golf ball, and the processor (11) is configured to adjust the determined target speed and/or target orientation.

8. The device according to any one of claims 1-7, comprising:
- a second sensor (32) configured to emit second waves and measure a reflection of said emitted second waves,
wherein the device (100) is configured to be changed to a third state in which the second sensor (32) is configured to measure third wave reflections of a golf clubhead being swung by the user, and the processor (11) is configured to determine a swing speed of the golf clubhead based on the measures third wave reflections.

9. The device according to claim 8, comprising:
- an indicator configured to indicate to the user the determined swing speed and/or instructions to the user to adjust the swing speed by the user, such that the determined swing speed would match the second predetermined speed.

10. The device according to claim 8 or claim 9, wherein, in the third state, the processor (11) is configured to determine a virtual distance travelled by a virtual golf ball based on the determined swing speed, wherein the display (40) is configured to display the determined virtual distance.

11. The device according to any one of claims 8-10, wherein, in the first state and/or second state, the first sensor (31) is configured to be pointing in a direction in which the golf ball is ejected, and wherein, in the third state, the second sensor (32) is configured to be pointing perpendicular to the direction in which the golf ball is ejected.

12. The device according to any one of claims 1-11, comprising
- an audio signal generator (56) configured to output a plurality of audio signals,
wherein, in the second state, the audio signal generator (56) is configured to output a first plurality of audio signals relating to a first moment the second golf ball is ejected by the ejector (20), a third moment when the second golf ball stops, and a second moment half-way between the first and second moments, based on the second predetermined speed,
**preferably** wherein, in the third state, the audio signal generator (56) is configured to output a second plurality of audio signals relating to a first moment the virtual golf ball is swung, a third moment when the virtual golf ball stops, and a second moment half-way between the first and second moments, based on the determined swing speed.

13. The device according to any one of claims 1-12, comprising:
- a display (40),
wherein, in the first state, the display (40) is configured to display the determined green speed,
wherein, in the second state, the display (40) is configured to display the determined target distance and/or target orientation, preferably to display instructions to orient the device (100) based on the determined target orientation,
**preferably** wherein, in the third state, the display (40) is configured to display the determined swing speed and/or virtual distance.

14. The device according to claim 13, wherein, in the third state, the processor is configured to determine a perceived distance of the user based on the determined target distance, the determined grass speed, and a preferred grass speed by the user, and the display (40) is configured to display the determined perceived distance.

15. The device according to any one of claims 1-14, comprising:
- a laser pointer (33) configured to project a line,
wherein, in the second state, the device (100) is configured to be oriented, such that the projected line aligns with the target point,
**preferably** wherein, in the second state, the line is projected with a negative offset based on the determined target orientation.
